# EUROPÄISCHE PATENTANMELDUNG

(11) **EP 2 477 354 A1**
(43) Veröffentlichungstag der Anmeldung: **18.07.2012**
(21) Anmeldenummer: 11000114.6
(22) Anmeldetag: 10.01.2011
(51) Int. Cl.: H04L 12/18

(54) **Verfahren zur Verteilung von breitbandigen Multicast-Signalen mittels eines Kommunikationsnetzwerks an eine Mehrzahl von Empfängern, sowie Verteileinrichtung und System**

(71) Anmelder: Deutsche Telekom AG, 53113 Bonn (DE)
(72) Erfinder: Leymann, Nicolai, 10435 Berlin (DE)
(74) Vertreter: Schwöbel, Thilo K.

(57) **Zusammenfassung**

Es wird ein Verfahren zur Verteilung von breitbandigen Multicast-Signalen mittels eines Kommunikationsnetzes an eine Mehrzahl von Empfängern (40) vorgeschlagen, wobei ein erstes Multicast-Signal einer ersten Gruppe von Empfängern zur Verfügung gestellt wird und wobei ein zweites Multicast-Signal einer zweiten Gruppe von Empfängern zur Verfügung gestellt wird, wobei zur Verteilung der Multicast-Signale eine Mehrzahl von Verteileinrichtungen (11,12,31,32,33) vorgesehen sind, wobei zur Steuerung der Verteilung der Multicast-Signale an die erste und zweite Gruppe von Empfängern das IGMP-Protokoll (Internet Group Management Protocol) verwendet wird, wobei zur Zuordnung eines spezifischen Empfängers zur ersten bzw. zur zweiten Gruppe von Empfängern eine zur Identifikation eines Netzwerkadapters des spezifischen Empfängers benutzte Identifizierung in Form einer physikalisch eindeutigen MAC-Adresse (Medium Access Control) verwendet wird.

## Beschreibung

### Stand der Technik

Die vorliegende Erfindung betrifft ein Verfahren zur Verteilung von breitbandigen Multicast-Signalen mittels eines Kommunikationsnetzwerks an eine Mehrzahl von Empfängern, wobei ein erstes Multicast-Signal einer ersten Gruppe von Empfängern zur Verfügung gestellt wird und wobei ein zweites Multicast-Signal einer zweiten Gruppe von Empfängern zur Verfügung gestellt wird.

Solche Multicast-Signale sind insbesondere als sog. IPTV-Signale (Internet Protocol Television-Signale) gängig und werden über Breitband-Telekommunikationsnetzwerke - insbesondere unter Verwendung von DSL-Teilnehmeranschlüsse (Digital Subscriber Line) an eine Vielzahl von Teilnehmern, beispielsweise Haushalte, übertragen. Die Teilnehmer weisen üblicherweise ein Netzabschlussgerät, insbesondere einen sogenannten Router, auf, so dass eine breitbandige Anbindung des Teilnehmers möglich ist. Das Netzabschlussgerät bzw. der Router wird im Folgenden auch als Empfänger bezeichnet.

Bei der Verwendung des IGMP-Protokolls (Internet Group Management Protocol) ist es zur Adressierung vorgesehen, sogenannte IP-Adressen (Internet Protocol Addresses) zu verwenden (nach dem Schema A.B.C.D, wobei A, B, C und D jeweils für eine Zahl zwischen 0 und 255 steht, d.h. 8 Bit repräsentiert). Diese haben den Nachteil, dass diese nicht zwingend (global) eindeutig sind, sondern teilweise für verschiedene Teilnehmer bzw. Empfänger den gleichen Wert aufweisen können.

Aus der Druckschrift WO 2010/100517 ist es bereits bekannt, zur Adressierung von Teilnehmern nicht nur IP-Adressen (Internet Protocol Addresses) zu verwenden, sondern auch MAC Gruppen Adressen (Media Access Control Group Addresses), die nach dem Schema E:F:G:H:I:J gebildet sind, wobei E, F, G, H, I und J jeweils ebenfalls für eine Zahl zwischen 0 und 255 steht, d.h. 8 Bit repräsentiert.

Hierbei werden jedoch spezielle MAC Gruppen Adressen verwendet, die keinen Schluss auf die physikalisch eindeutige MAC-Adresse eines Empfängers bzw. eines Teilnehmers zulassen, weil die solchermaßen definierte spezielle MAC-Gruppen Adresse von der verwendeten IP-Adresse abgeleitet ist. Entsprechend ist es hierbei nicht in eindeutiger Weise möglich, zwischen verschiedenen Teilnehmern zu unterscheiden, so dass nicht entschieden werden kann, ob ein Teilnehmer einer ersten Gruppe von Teilnehmern zugeordnet ist, die ein erstes Multicast-Signal empfangen möchten oder einer zweiten Gruppe von Teilnehmern zugeordnet ist, die ein zweites Multicast-Signal empfangen möchten. Insbesondere ist es hierbei nicht oder nur mit erheblichem Aufwand möglich, zu entscheiden, ob einem bestimmten Multicast-Signal (und ggf. in einer bestimmten geographischen Region) überhaupt Teilnehmer zugeordnet sind, die dieses Multicast-Signal empfangen möchten.

Insbesondere für die Frage, welches Multicast-Signal überhaupt von welchen Teilnehmern angefordert wird und damit auch in dem Zugangsnetzwerk (access network) des Kommunikationsnetzwerks bis zu einer bestimmten Stelle (insbesondere geographische Region) transportiert werden muss, ist es erforderlich, dass an zumindest einer Stelle im Kommunikationsnetzwerk die Information vorliegt, welcher Teilnehmer bzw. welcher Empfänger welches Multicast-Signal empfängt bzw. abonniert hat. Diese Information wird üblicherweise mit dem Begriff "explicit tracking" bzw. explizite Verfolgung des Empfangsstatus bestimmter Multicast-Signale belegt.

In einem Kommunikationsnetzwerk, welches das IGMP-Protokoll (Internet Group Management Protocol) verwendet, ist es zwar möglich, durch die Versendung (durch eine zentrale Netzwerkinstanz) einer sogenannten IGMP-Nachricht vom Typ "IGMP query" die Information zu erhalten, welche Teilnehmer bzw. welche Empfänger welche Multicast-Signale abonniert haben (bzw. welcher Gruppe von Empfängern zugeordnet sind), jedoch führt eine solche Vorgehensweise zumindest in manchen Fällen (nämlich für solche Gruppen, die eine vergleichsweise große Anzahl von Teilnehmern aufweisen) dazu, dass als Reaktion einer solchen IGMP query-Nachricht eine Vielzahl von Rückmeldungen quasi zeitsynchron zu verarbeiten sind, was das Kommunikationsnetzwerk einer erheblichen Belastung aussetzt.

Der Erfindung liegt die Aufgabe zugrunde, ein Verfahren bereitzustellen, das in diesem Zusammenhang eine einfache und das Kommunikationsnetzwerk wenig belastende Möglichkeit bereitstellt in effizienter Weise das Kommunikationsnetzwerk so zu steuern, dass möglichst ohne, jedenfalls jedoch ohne großen, Zusatzaufwand die Information über die einem Multicast-Signal zugeordneten Teilnehmer bzw. Empfänger in zuverlässiger Weise bereitgestellt und verarbeitet werden kann.

### Offenbarung der Erfindung

Diese Aufgabe wird gelöst durch ein Verfahren zur Verteilung von breitbandigen Multicast-Signalen mittels eines Kommunikationsnetzwerks an eine Mehrzahl von Empfängern, wobei ein erstes Multicast-Signal einer ersten Gruppe von Empfängern zur Verfügung gestellt wird und wobei ein zweites Multicast-Signal einer zweiten Gruppe von Empfängern zur Verfügung gestellt wird, wobei das Kommunikationsnetzwerk zur Verteilung der Multicast-Signale eine Mehrzahl von Verteileinrichtungen aufweist, wobei zur Steuerung der Verteilung der Multicast-Signale an die erste und zweite Gruppe von Empfängern das IGMP-Protokoll (Internet Group Management Protocol) oder das MLD-Protokoll (Multicast Listener Discovery) verwendet wird, wobei zur Zuordnung eines spezifischen Empfängers zur ersten und/oder zur zweiten Gruppe von Empfängern eine zur Identifizierung eines Netzwerkadapters des spezifischen Empfängers benutzte Identifizierung in Form einer physikalisch eindeutigen MAC-Adresse (Medium Access Control) verwendet wird.

Hierdurch ist es erfindungsgemäß in vorteilhafter Weise möglich, dass die MAC-Adresse zur Identifizierung derjenigen Empfänger herangezogen wird, die einer bestimmten Gruppe von Teilnehmern (die ein bestimmtes Multicast-Signal empfangen möchten bzw. ein solches Multicast-Signal abonniert haben) zugeordnet sind. Erfindungsgemäß ist es dadurch vorteilhaft möglich, auch dann eine Verfolgung des Empfangsstatus bestimmter Multicast-Signale (explicit tracking) durchzuführen, wenn
-- mehrere Endgeräte über die gleiche IP-Adresse verfügen bzw. wenn
-- ein Endgerät oder mehrere Endgeräte über keine IP-Adresse (d.h. IP-Adresse ist gleich "0.0.0.0") verfügen.

Erfindungsgemäß ist es bevorzugt, dass die Verteileinrichtungen des Kommunikationsnetzwerks zentrale Verteileinrichtungen und dezentrale Verteileinrichtungen aufweist.

Hierdurch ist es erfindungsgemäß vorteilhaft möglich, dass die Topologie des Kommunikationsnetzwerks, insbesondere der Aufbau des Zugangsnetzwerks flexibel gehalten werden kann und trotzdem die Vorteile des erfindungsgemäßen Verfahrens genutzt werden können.

Gemäß einer bevorzugten Ausführungsform der vorliegenden Erfindung ist es vorgesehen, dass die Information über die Zuordnung des spezifischen Empfängers zur ersten und/oder zur zweiten Gruppe von Empfängern in einer zentralen Verteileinrichtung des Kommunikationsnetzwerkes gespeichert werden.

Durch diese Maßnahme ist es erfindungsgemäß in vorteilhafter Weise möglich, dass die Gruppenzuordnung der verschiedenen Teilnehmer bzw. Empfänger für die verschiedenen Multicast-Signale in einfacher Weise und zentralisiert vorgenommen und koordiniert werden kann.

Ferner ist es erfindungsgemäß bevorzugt vorgesehen, dass die breitbandigen Multicast-Signale IPTV-Fernsehsignale (Internet Protocol Television) sind, wobei das erste Multicast-Signal erstes Fernsehprogramm umfasst und wobei das zweite Multicast-Signal ein zweites Fernsehprogramm umfasst, wobei dem ersten Fernsehprogramm die erste Gruppe von Empfängern und dem zweiten Fernsehprogramm die zweite Gruppe von Empfängern zugeordnet wird.

Erfindungsgemäß ist es weiterhin auch bevorzugt vorgesehen, dass
-- zur Aufnahme eines spezifischen Empfängers in die erste Gruppe von Empfängern oder in die zweite Gruppe von Empfängern seitens des spezifischen Empfängers eine Gruppenaufnahme-Nachricht, insbesondere eine IGMP-join-Nachricht, an wenigstens eine der Verteileinrichtungen gesandt wird
   und/oder dass
-- zum Verlassen eines spezifischen Empfängers aus der ersten Gruppe von Empfängern seitens des spezifischen Empfängers eine Verlassen-Nachricht, insbesondere eine IGMP-leave-Nachricht, an wenigstens eine der Verteileinrichtungen gesandt wird.

Erfindungsgemäß ist es ferner auch bevorzugt vorgesehen, dass eine der Verteileinrichtungen beim Empfang einer von einem spezifischen Empfänger empfangenen Gruppenaufnahme-Nachricht oder Verlassen-Nachricht zur Identifikation des spezifischen Empfängers die zur Identifizierung des Netzwerkadapters des spezifischen Empfängers benutzte Identifizierung in Form der physikalisch eindeutigen MAC-Adresse (Medium Access Control) verwendet.

Insgesamt ist es damit durch die erfindungsgemäße Verwendung der physikalisch eindeutigen MAC-Adresse des Teilnehmers bzw. Empfängers zu dessen Identifizierung in einfacher Weise möglich, ein genaues Bild aller anhängigen Abonnements bzw. Nachfragen zur Versorgung mit breitbandigen Multicast-Signalen der verschiedenen Teilnehmer bzw. Empfänger zu haben und entsprechen eine zielgenaue Versorgung aller Teilnehmer des Kommunikationsnetzwerks mit den Multicast-Signalen zu gewährleisten.

Erfindungsgemäß ist es ferner bevorzugt vorgesehen, dass eine explizite Nachverfolgung (explicit tracking) der Information, welcher Empfänger zum Empfang welchen Multicast-Signals konfiguriert ist, mittels der Identifikation der Netzwerkadapter der Empfänger unter Benutzung der physikalisch eindeutigen MAC-Adresse (Medium Access Control) erfolgt.

Die vorliegende Erfindung bezieht sich ferner auch auf eine Verteileinrichtung zur Verteilung von breitbandigen Multicast-Signalen in einem Kommunikationsnetzwerk an eine Mehrzahl von Empfängern, wobei ein erstes Multicast-Signal zur Bereitstellung bei Empfängen einer ersten Gruppe von Empfängern vorgesehen ist und wobei ein zweites Multicast-Signal zur Bereitstellung bei Empfängern einer zweiten Gruppe von Empfängern vorgesehen ist, wobei zur Steuerung der Verteilung der Multicast-Signale an die erste und zweite Gruppe von Empfängern die Verwendung des IGMP-Protokolls (Internet Group Management Protocol) oder des MLD-Protokolls (Multicast Listener Discovery) vorgesehen ist, wobei zur Zuordnung eines spezifischen Empfängers zur ersten und/oder zur zweiten Gruppe von Empfängern die Verwendung eines zur Identifizierung eines Netzwerkadapters des spezifischen Empfängers benutzte Identifizierung in Form einer physikalisch eindeutigen MAC-Adresse (Medium Access Control) vorgesehen ist.

Weiterhin bezieht sich die vorliegende Erfindung auf ein System zur Verteilung von breitbandigen Multicast-Signalen in einem Kommunikationsnetzwerk an eine Mehrzahl von Empfängern, wobei ein erstes Multicast-Signal zur Bereitstellung bei Empfängen einer ersten Gruppe von Empfängern vorgesehen ist und wobei ein zweites Multicast-Signal zur Bereitstellung bei Empfängern einer zweiten Gruppe von Empfängern vorgesehen ist, wobei das Kommunikationsnetzwerk zur Verteilung der Multicast-Signale eine Mehrzahl von Verteileinrichtungen aufweist, wobei zur Steuerung der Verteilung der Multicast-Signale an die erste und zweite Gruppe von Empfängern die Verwendung des IGMP-Protokolls (Internet Group Management Protocol) oder des MLD-Protokolls (Multicast Listener Discovery) vorgesehen ist, wobei zur Zuordnung eines spezifischen Empfängers zur ersten und/oder zur zweiten Gruppe von Empfängern die Verwendung eines zur Identifizierung eines Netzwerkadapters des spezifischen Empfängers benutzte Identifizierung in Form einer physikalisch eindeutigen MAC-Adresse (Medium Access Control) vorgesehen ist.

Ferner bezieht sich die vorliegende Erfindung auch auf ein Programm bzw. ein Computerprogrammprodukt mit einem computerlesbaren Programmcode zur Steuerung einer erfindungsgemäßen Verteileinrichtung oder eines erfindungsgemäßen Systems.

Ausführungsbeispiele der Erfindung sind in der Zeichnung dargestellt und in der nachfolgenden Beschreibung näher erläutert. Die Figuren schränken den allgemeinen Erfindungsgedanken nicht ein.

### Kurze Beschreibung der Zeichnungen

Figur 1 zeigt eine schematische Darstellung eines Kommunikationsnetzwerks zur Verteilung von Multicast-Signalen gemäß der vorliegenden Erfindung.
Figur 2 zeigt eine schematische Darstellung einer Zuordnung von Empfängern zu einer ersten Gruppe von Empfängern und einer zweiten Gruppe von Empfängern.

### Ausführungsform(en) der Erfindung

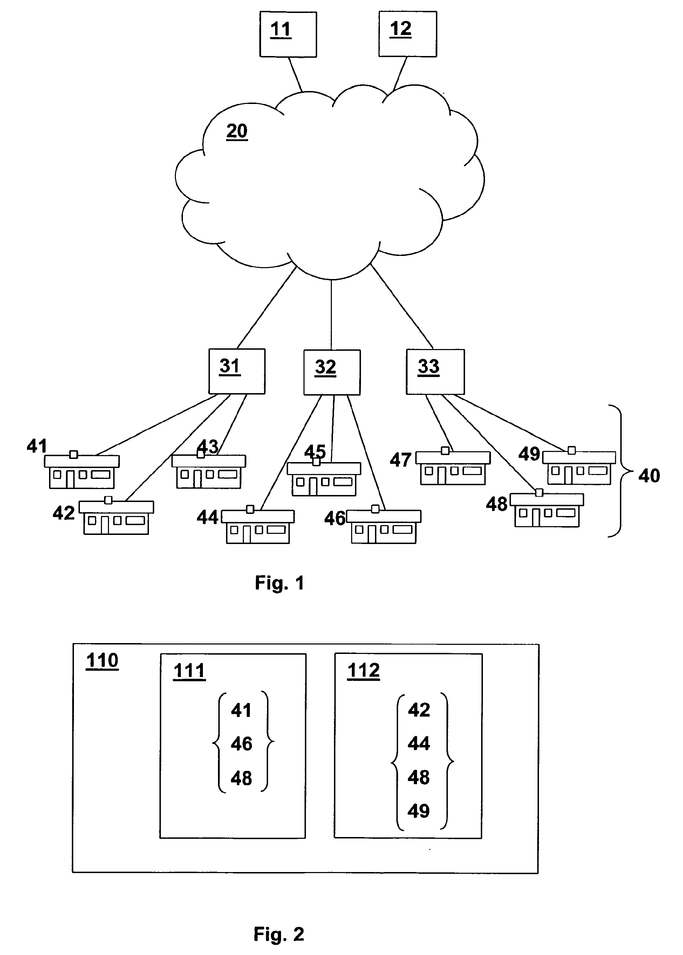

In Figur 1 ist schematisch eine schematische Darstellung eines Kommunikationsnetzwerks zur Verteilung von Multicast-Signalen gemäß der vorliegenden Erfindung abgebildet. Hierbei ist eine Mehrzahl von Verteileinrichtungen 11, 12, 31, 32, 33 vorgesehen, mit Hilfe der eine Mehrzahl von Empfängern 40 bzw. von Teilnehmern des Kommunikationsnetzwerks mit breitbandigen Signalen versorgt werden. Die Teilnehmer 40 sind insgesamt mit dem Bezugszeichen 40 bezeichnet, wobei stellvertretend für eine große Anzahl von Teilnehmern bzw. Empfängern 40 in der Figur 1 ein erster Empfänger 41, ein zweiter Empfänger 42, ein dritter Empfänger 43, ein vierter Empfänger 44, ein fünfter Empfänger 45, ein sechster Empfänger 46, ein siebter Empfänger 47, ein achter Empfänger 48 und ein neunter Empfänger 49 dargestellt ist.

Die breitbandigen Signale können als sogenannte Unicast-Signale vorgesehen sein, d.h. solche Signale, die individuell lediglich einem der Empfänger 40 bereitgestellt werden, etwa individuelle Signale, die einen Informationsinhalt etwa einer gerade von einem bestimmten der Empfänger 40 abgerufenen Internetseite bzw. via Internet zugänglichen Information entsprechen.

Ferner können die breitbandigen Signale auch als sogenannte Multicast-Signale vorgesehen sein, d.h. solche Signale die gleichzeitig einer Mehrzahl von Empfängern 40 bereitgestellt werden, weil eine Mehrzahl der Empfänger diese Multicast-Signale abonniert hat bzw. den Wunsch geäußert hat, diese Signale zu empfangen. Solche Multicast-Signale sind insbesondere IPTV-Signale, die insbesondere als verschiedene Multicast-Signale übertragbar sind und dann verschiedenen Programminhalten entsprechen. So ist es insbesondere vorgesehen, dass ein erstes Multicast-Signal einem ersten Fernsehprogramm bzw. Fernsehkanal entspricht und ein zweites Multicast-Signal einem zweiten Fernsehprogramm bzw. Fernsehkanal entspricht.

Wenn unterschiedliche Empfänger 40 den Empfangswunsch für unterschiedliche Multicast-Signale signalisiert haben, ist es möglich, Gruppen von Empfängern 40 zu bilden, die jeweils das gleiche Multicast-Signal empfangen möchten.

Von den in Figur 1 dargestellten Verteileinrichtungen 11, 12, 31, 32, 33 ist eine erste Verteileinrichtung 11 beispielsweise zur Verteilung einer Mehrzahl von Multicast-Signalen vorgesehen, während eine zweite Verteileinrichtung 12 beispielsweise zur Verteilung von Unicast-Signalen oder auch zur Verteilung weiterer Multicast-Signale vorgesehen ist. Hierbei ist sowohl die erste Verteileinrichtung 11 als auch die zweite Verteileinrichtung 12 als sogenannte zentrale Verteileinrichtungen 11, 12 ausgebildet, d.h. innerhalb des Kommunikationsnetzwerks sind diese zentralen Verteileinrichtungen 11, 12 an vergleichsweise zentraler Stelle angeordnet, d.h. für einen relativ großen Netzbereich zuständig.

Von den in Figur 1 dargestellten Verteileinrichtungen 11, 12, 31, 32, 33 ist eine dritte Verteileinrichtung 31, eine vierte Verteileinrichtung 32 und eine fünfte Verteileinrichtung 33 beispielsweise als Digital Subscriber Line Access Multiplexer (DSLAM), d.h. als DSL-Zugangskonzentrator, ausgebildet. Hierbei ist sowohl die dritte Verteileinrichtung 31 als auch die vierte Verteileinrichtung 32 und die fünfte Verteileinrichtung 33 als sogenannte dezentrale Verteileinrichtungen 31, 32, 33 ausgebildet, d.h. innerhalb des Kommunikationsnetzwerks sind diese dezentralen Verteileinrichtungen 31, 32, 33 an vergleichsweise dezentraler Stelle angeordnet, d.h. für einen relativ kleinen Netzbereich zuständig.

Beispielsweise handelt es sich bei den zentralen Verteileinrichtungen 11, 12 um sogenannte Remote Access Router (Fernzugriffsrouter) bzw. um sogenannte Broadband Network Gateways (Breitband Netzwerk Knoten). Insbesondere ist es erfindungsgemäß vorgesehen, dass die erste Verteileinrichtung 11 als sogenannter IPTV-Service Router zur Verteilung einer Mehrzahl von Multicast-Signalen, insbesondere IPTV-Signalen, ausgebildet ist, während die zweite Verteileinrichtung 12 als sogenannter BB-RAR (Broadband Remote Access Router) zur Verteilung von Unicast-Signalen, beispielsweise für Internetinhalte, ausgebildet ist. Es ist jedoch so, dass das Explicit Tracking unabhängig von der Anzahl solcher Verteileinrichtungen (wie etwa BBRAR oder DSR-Router) ist und lediglich gewährleistet sein muss, dass eine Netzwerkkomponente die MAC-Adressen der Multicast-Empfänger verwaltet. Im Beispiel würde dies bedeuten, dass sich die dritte Verteileinrichtung 31 "merkt" (d.h. speichert), dass beispielsweise der erste Empfänger 41 und der zweite Empfänger 42 Empfänger sind, die ein erstes Multicast-Signal empfangen (d.h. die MAC Adressen des ersten und zweiten Empfängers 41, 42 werden in der dritten Verteileinrichtung 31 mit (in diesem Beispiel) einer Zuordnung zum ersten Multicast-Signal gespeichert). Sobald die dritte Verteileinrichtung 31 eine Leave-Nachricht (bzw. ein Leave) vom ersten Empfänger 41 empfangen hat, wird diese MAC Adresse aus einer korrespondierenden (der dritten Verteileinrichtung 31 zugeordneten) Tabelle entfernt. Die dritte Verteileinrichtung 31 schickt die Leave Nachricht jedoch nicht weiter (an die erste oder zweite Verteileinrichtung 11, 12, was zur Folge hätte, dass die dritte Verteileinrichtung 31 nicht mehr mit dem entsprechenden Informationsinhalt versorgt werden würde), da die dritte Verteileinrichtung 31 immer noch den zweiten Empfänger 42 als Empfänger registriert hat (da die MAC-Adresse des zweiten Empfängers 42 noch in der entsprechenden (der dritten Verteileinrichtung 31 zugeordneten) Tabelle enthalten ist). Erst wenn der zweite Empfänger 42 eine Leave-Nachricht schickt, wird auch diese MAC Adresse aus der entsprechenden Tabelle der dritten Verteileinrichtung 31 entfernt. Da diese Tabelle nun leer ist, kann die dritte Verteileinrichtung 31 die Leave-Nachricht weiterschicken.

Zwischen den zentralen Verteileinrichtungen 11, 12 und den dezentralen Verteileinrichtungen 31, 32, 33 können weitere Einheiten bzw. Komponenten des Kommunikationsnetzwerks angeordnet sein, die zusammenfassend mit dem Bezugszeichen 20 in Figur 1 bezeichnet sind.

Durch die Verwendung von der physikalisch eindeutigen MAC-Adressen (Medium Access Control-Adressen) der Empfänger 40 zur Identifizierung eines Netzwerkadapters ist es erfindungsgemäß möglich, dass bei der Gruppenbildung zur Definition der einem Multicast-Signal zugeordneten Empfänger 40 (bei zumindest einer der Verteileinrichtungen 11, 12, 31, 32, 33 des Kommunikationsnetzwerks) die Information über die Gruppenzuordnung der Empfänger 40 vorliegt. Ein Beispiel einer solchen Gruppenbildung 110 bzw. Gruppenzuordnung 110 ist in Figur 2 dargestellt. Diese Gruppenzuordnung 110 ist beispielsweise in Form einer Datei oder in Form einer Datenbank beispielsweise bei der ersten Verteileinrichtung 11 angesiedelt und entspricht der o.g., beispielsweise in der dritten Verteileinrichtung 31 geführten bzw. gespeicherten Tabelle über die Gruppenzugehörigkeit von Empfängern 40. Die Gruppenzuordnung 110 erfolgt dynamisch durch das "explicit Tracking" der MAC-Adressen der Multicast-Empfänger. Diese Liste bzw. Tabelle wird in der Regel im Speicher einer Netzwerkkomponente gehalten. Hierbei umfasst diese Gruppenzuordnung 110 eine erste Gruppe 111 von Empfängern 40 und eine zweite Gruppe von Empfängern 40, wobei der ersten Gruppe von Empfängern beispielsweise ein erstes Multicast-Signal und der zweiten Gruppe von Empfängern beispielsweise ein zweites Multicast-Signal zugeordnet ist. Rein beispielhaft ist nun der ersten Gruppe der erste Empfänger 41, der sechste Empfänger und der achte Empfänger 48 zugeordnet, während der zweiten Gruppe der zweite Empfänger 42, der vierte Empfänger 44, der achte Empfänger 48 und der neunte Empfänger 49 zugeordnet ist. Die Anzahl der Gruppen von Empfängern 40 ist hierbei jedoch nicht auf zwei begrenzt, sondern es können eine Vielzahl von verschiedenen Gruppen bzw. Multicast-Signalen verwendet werden.

## Patentansprüche

1. Verfahren zur Verteilung von breitbandigen Multicast-Signalen mittels eines Kommunikationsnetzwerks an eine Mehrzahl von Empfängern (40), wobei ein erstes Multicast-Signal einer ersten Gruppe von Empfängern (40) zur Verfügung gestellt wird und wobei ein zweites Multicast-Signal einer zweiten Gruppe von Empfängern (40) zur Verfügung gestellt wird, wobei das Kommunikationsnetzwerk zur Verteilung der Multicast-Signale eine Mehrzahl von Verteileinrichtungen (11, 12, 31, 32, 33) aufweist, wobei zur Steuerung der Verteilung der Multicast-Signale an die erste und zweite Gruppe von Empfängern (40) das IGMP-Protokoll (Internet Group Management Protocol) oder das MLD-Protokoll (Multicast Listener Discovery) verwendet wird, wobei zur Zuordnung eines spezifischen Empfängers (40) zur ersten und/oder zur zweiten Gruppe von Empfängern (40) eine zur Identifizierung eines Netzwerkadapters des spezifischen Empfängers (40) benutzte Identifizierung in Form einer physikalisch eindeutigen MAC-Adresse (Medium Access Control) verwendet wird.

2. Verfahren nach Anspruch 1, **dadurch gekennzeichnet, dass** die Verteileinrichtungen (11, 12, 31, 32, 33) des Kommunikationsnetzwerks zentrale Verteileinrichtungen (11, 12) und dezentrale Verteileinrichtungen (31, 32, 33) aufweist.

3. Verfahren nach Anspruch 1 oder 2, **dadurch gekennzeichnet, dass** die Information über die Zuordnung des spezifischen Empfängers (40) zur ersten und/oder zur zweiten Gruppe von Empfängern (40) in einer zentralen Verteileinrichtung (11, 12) des Kommunikationsnetzwerkes gespeichert werden.

4. Verfahren nach einem der vorhergehenden Ansprüchen, **dadurch gekennzeichnet, dass** die breitbandigen Multicast-Signale IPTV-Fernsehsignale (Internet Protocol Television) sind, wobei das erste Multicast-Signal erstes Fernsehprogramm umfasst und wobei das zweite Multicast-Signal ein zweites Fernsehprogramm umfasst, wobei dem ersten Fernsehprogramm die erste Gruppe von Empfängern (40) und dem zweiten Fernsehprogramm die zweite Gruppe von Empfängern (40) zugeordnet wird.

5. Verfahren nach einem der vorhergehenden Ansprüchen, **dadurch gekennzeichnet, dass** zur Aufnahme eines spezifischen Empfängers (40) in die erste Gruppe von Empfängern (40) oder in die zweite Gruppe von Empfängern (40) seitens des spezifischen Empfängers (40) eine Gruppenaufnahme-Nachricht, insbesondere eine IGMP-join-Nachricht, an wenigstens eine der Verteileinrichtungen (11, 12, 31, 32, 33) gesandt wird.

6. Verfahren nach einem der vorhergehenden Ansprüchen, **dadurch gekennzeichnet, dass** zum Verlassen eines spezifischen Empfängers (40) aus der ersten Gruppe von Empfängern (40) seitens des spezifischen Empfängers (40) eine Verlassen-Nachricht, insbesondere eine IGMP-leave-Nachricht, an wenigstens eine der Verteileinrichtungen (11, 12, 31, 32, 33) gesandt wird.

7. Verfahren nach einem der vorhergehenden Ansprüchen, **dadurch gekennzeichnet, dass** eine der Verteileinrichtungen (11, 12, 31, 32, 33) beim Empfang einer von einem spezifischen Empfänger (40) empfangenen Gruppenaufnahme-Nachricht oder Verlassen-Nachricht zur Identifikation des spezifischen Empfängers (40) die zur Identifizierung des Netzwerkadapters des spezifischen Empfängers (40) benutzte Identifizierung in Form der physikalisch eindeutigen MAC-Adresse (Medium Access Control) verwendet.

8. Verfahren nach einem der vorhergehenden Ansprüchen, **dadurch gekennzeichnet, dass** eine explizite Nachverfolgung (explicit tracking) der Information, welcher Empfänger (40) zum Empfang welchen Multicast-Signals konfiguriert ist, mittels der Identifikation der Netzwerkadapter der Empfänger (40) unter Benutzung der physikalisch eindeutigen MAC-Adresse (Medium Access Control) erfolgt.

9. Verteileinrichtung zur Verteilung von breitbandigen Multicast-Signalen in einem Kommunikationsnetzwerk an eine Mehrzahl von Empfängern (40), wobei ein erstes Multicast-Signal zur Bereitstellung bei Empfängen (40) einer ersten Gruppe von Empfängern (40) vorgesehen ist und wobei ein zweites Multicast-Signal zur Bereitstellung bei Empfängern (40) einer zweiten Gruppe von Empfängern (40) vorgesehen ist, wobei zur Steuerung der Verteilung der Multicast-Signale an die erste und zweite Gruppe von Empfängern (40) die Verwendung des IGMP-Protokolls (Internet Group Management Protocol) oder des MLD-Protokolls (Multicast Listener Discovery) vorgesehen ist, wobei zur Zuordnung eines spezifischen Empfängers (40) zur ersten und/oder zur zweiten Gruppe von Empfängern (40) die Verwendung eines zur Identifizierung eines Netzwerkadapters des spezifischen Empfängers (40) benutzte Identifizierung in Form einer physikalisch eindeutigen MAC-Adresse (Medium Access Control) vorgesehen ist.

10. System zur Verteilung von breitbandigen Multicast-Signalen in einem Kommunikationsnetzwerk an eine Mehrzahl von Empfängern (40), wobei ein erstes Multicast-Signal zur Bereitstellung bei Empfängen (40) einer ersten Gruppe von Empfängern (40) vorgesehen ist und wobei ein zweites Multicast-Signal zur Bereitstellung bei Empfängern (40) einer zweiten Gruppe von Empfängern (40) vorgesehen ist, wobei das Kommunikationsnetzwerk zur Verteilung der Multicast-Signale eine Mehrzahl von Verteileinrichtungen (11, 12, 31, 32, 33) aufweist, wobei zur Steuerung der Verteilung der Multicast-Signale an die erste und zweite Gruppe von Empfängern (40) die Verwendung des IGMP-Protokolls (Internet Group Management Protocol) oder des MLD-Protokolls (Multicast Listener Discovery) vorgesehen ist, wobei zur Zuordnung eines spezifischen Empfängers (40) zur ersten und/oder zur zweiten Gruppe von Empfängern (40) die Verwendung eines zur Identifizierung eines Netzwerkadapters des spezifischen Empfängers (40) benutzte Identifizierung in Form einer physikalisch eindeutigen MAC-Adresse (Medium Access Control) vorgesehen ist.

11. Programm mit einem computerlesbaren Programmcode zur Steuerung einer Verteileinrichtung zur Verteilung von breitbandigen Multicast-Signalen in einem Kommunikationsnetzwerk an eine Mehrzahl von Empfängern (40) nach Anspruch 9 oder eines Systems zur Verteilung von breitbandigen Multicast-Signalen in einem Kommunikationsnetzwerk an eine Mehrzahl von Empfängern (40) nach Anspruch 10.

12. Computerprogrammprodukt mit einem computerlesbaren Programmcode zur Steuerung einer Verteileinrichtung zur Verteilung von breitbandigen Multicast-Signalen in einem Kommunikationsnetzwerk an eine Mehrzahl von Empfängern (40) nach Anspruch 9 oder eines Systems zur Verteilung von breitbandigen Multicast-Signalen in einem Kommunikationsnetzwerk an eine Mehrzahl von Empfängern (40) nach Anspruch 10.
